# FASCICULE DE BREVET EUROPEEN

(11) **EP 0 443 901 B1**
(45) Date de publication et mention de la délivrance du brevet: **19.04.1995**
(21) Numéro de dépôt: 91400321.5
(22) Date de dépôt: 11.02.1991
(51) Int. Cl.: F16H 57/04, F16N 29/02, B64C 27/12

(54) **Boîte de transmission principale de giravion ayant un dispositif de lubrification de secours.**
Hauptgetriebe eines Drehflügelflugzeugs mit einer Notschmiereinrichtung
Rotorcraft main gearbox having an emergency lubrication device

(30) Priorité: 20.02.1990 FR 9002015
(43) Date de publication de la demande: 28.08.1991
(73) Titulaire: AEROSPATIALE Société Nationale Industrielle, 75781 Paris Cédex 16 (FR)
(72) Inventeur: François, Roland Clement, F-13480 Cabries (FR); Marnot, Paul Henri, F-13250 Cornillon-Confoux (FR)
(74) Mandataire: Lhuillier, René

(56) Documents cités:
- DE-A- 3 730 916
- DE-B- 1 252 017
- DE-C- 843 186
- FR-A- 1 194 993
- FR-A- 2 003 737
- GB-A- 2 116 645
- US-A- 4 642 604

## Description

L'invention a pour objet une boîte de transmission principale de giravion ayant un dispositif de lubrification de secours destiné à prolonger le temps de fonctionnement, et améliorer la sécurité d'un réducteur à engrenages dans le cas où la lubrification normale est hors service, et concerne plus particulièrement un dispositif pour assurer une lubrification minimale des organes essentiels du réducteur. Elle s'applique plus particulièrement aux boîtes de transmission principales interposées entre le ou les moteurs et le ou les rotors de giravions.

Dans ces boîtes de transmission, les organes de réduction, engrenages et roulements, sont généralement lubrifiés par de l'huile sous pression grâce à une ou à des pompes de lubrification qui sont entraînées par des jeux d'engrenages prenant leur mouvement sur une chaîne principale du réducteur, ou par une source d'entraînement annexe.

Il est évidemment important, lorsque le système normal de lubrification du réducteur principal est défaillant, soit par épuisement de fluide dû à une fuite, soit par la détérioration du générateur de pression ou de la pompe, qu'un système de lubrification minimale puisse s'y substituer. Ainsi un giravion pourraît, en cas de besoin, rejoindre au minimum de puissance, un point d'atterrissage favorable. Ceci serait particulièrement avantageux pour les giravions amenés à faire des survols maritimes prolongés, par exemple ceux utilisés au profit de l'exploitation pétrolière "offshore".

Il existe déjà des systèmes de lubrification de sécurité adaptés à des véhicules ou des bateaux, qui consistent à prévoir au moins un réservoir auxiliaire d'huile, disposé en un point plus élevé que les mécanismes à lubrifier. Par exemple dans le US-A 4721185 est décrit un système à réserve d'huile pour véhicules dans lequel un réservoir complémentaire alimenté en huile, sert à fournir de l'huile filtrée, aspirée par une pompe, au système hydraulique du véhicule. Il y a donc, pour extraire l'huile du réservoir, une pompe qui n'est pas à l'abri d'une anomalie de fonctionnement. Dans un autre domaine tel que celui des bateaux, comme montré par exemple dans le US-A-2 988 154, un circuit normal de lubrification est apte à alimenter un second réservoir en situation élevée, avec des pompes et vannes permettant de maintenir une pression d'huile égale quelles que soient les conditions d'utilisation.

On connaît aussi par le DE-A-3 730 916 un dispositif de lubrification pour réducteur à engrenages dans lequel un circuit normal de lubrification distribue l'huile sous pression en direction des organes du réducteur. De même dans le DE-B-1 252 017 est décrit un réservoir supplémentaire de lubrification servant de conduit d'alimentation de l'organe à lubrifier par l'intermédiaire du circuit normal.

Mais tous ces systèmes sont des systèmes de lubrification de sécurité destinés à pallier une défaillance partielle ou totale de la génération de la pression et utilisent le circuit de distribution du dispositif normal pour assurer une lubrification équivalente. Mais de tels systèmes de secours restent inopérants si le circuit normal est lui-même totalement défaillant, par exemple à la suite de la perte totale du fluide de lubrification.

C'est pourquoi la Demanderesse a imaginé un dispositif qui assure une lubrification minimale des organes essentiels du réducteur, même s'il y a absence accidentelle d'alimentation du circuit normal et du circuit auxiliaire de sécurité, pour la lubrification sous pression dudit réducteur, y compris lorsque la réserve normale d'huile dans laquelle puise le circuit normal de lubrification est épuisée. Le dispositif en question permet donc un minimum de lubrification pour assurer le fonctionnement du réducteur pendant un temps suffisant pour permettre un atterrissage dans de bonnes conditions de sécurité.

L'invention a donc pour objet une boite de transmission principale de giravion ayant un dispositif de lubrification de secours pour réducteur dans laquelle un circuit normal de lubrification alimenté par une pompe puisant dans un réservoir inférieur normal distribue l'huile sous pression, par des gicleurs, en direction du réducteur, dispositif selon lequel au moins un conduit de dérivation provenant du circuit normal alimente en huile au moins un réservoir de secours, placé au-dessus des éléments critiques du réducteur, qui distribue l'huile sur lesdits éléments critiques par un circuit spécial de lubrification de secours du réducteur ou de la boîte de transmission, pour assurer une lubrification minimale desdits éléments critiques pendant un temps suffisant pour rejoindre un terrain d'atterrissage, dispositif selon lequel également le circuit spécial est calibré pour que le débit d'huile acheminé par le conduit de dérivation vers le réservoir de secours soit supérieur au débit d'huile s'écoulant par ledit circuit spécial, la partie supérieure ouverte du réservoir de secours formant déversoir pour le trop-plein d'huile qui déborde et fait retour vers le réservoir normal inférieur.

En variante une pompe de secours est prévue sur au moins un conduit d'alimentation de secours pour alimenter des gicleurs de secours à faible débit.

D'autres caractéristiques et avantages de l'invention apparaîtront à la lecture de la description qui va suivre de formes de réalisation faisant référence aux dessins annexés qui représentent :
figure 1 une vue schématique en coupe d'un dispositif de lubrification en fonctionnement normal ;
figure 2 la même vue en fonctionnement de secours ;
figure 3 une variante de réalisation en fonctionnement de secours.

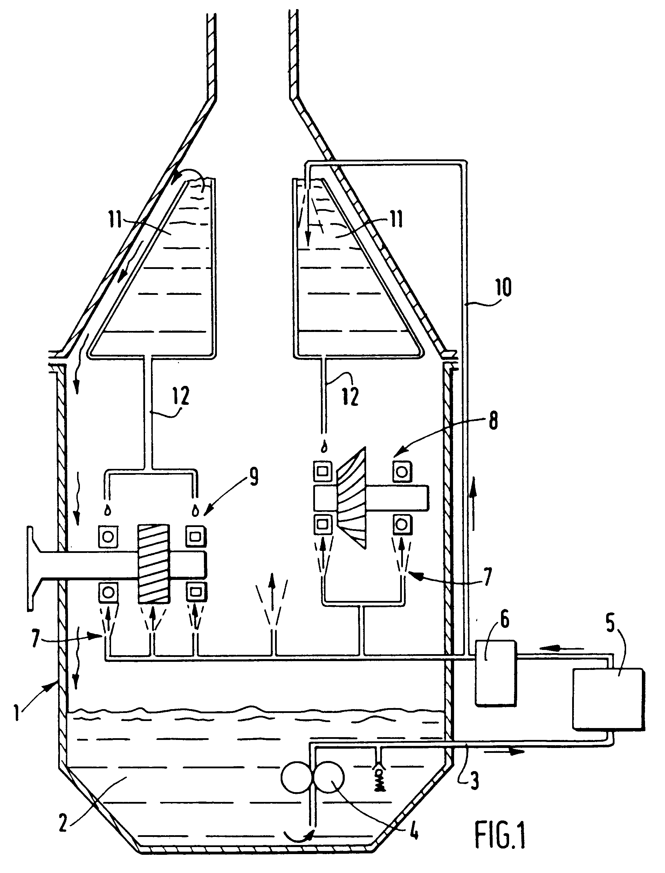

On a représenté schématiquement à la figure 1 une boîte 1 de transmission principale d'un giravion disposant à sa partie inférieure d'un réservoir d'huile 2. Le circuit normal de lubrification 3 alimenté par une pompe 4, traverse un échangeur 5 et un filtre 6 et distribue l'huile sous pression par des gicleurs d'alimentation 7, en direction des organes réducteurs 8 et 9 constitués d'engrenages portés par des arbres tournant sur des roulements. Un conduit de dérivation 10 provenant du circuit normal 3 distribue de l'huilé filtrée vers un réservoir de secours 11, placé à la partie supérieure de la boîte 1, dont la partie supérieure ouverte forme déversoir et autorise le débordement de l'huile et son retour vers le réservoir normal inférieur 2. Le réservoir de secours est pourvu, à sa partie inférieure, de conduits d'alimentation de secours calibrés 12 qui permettent de lubrifier par gravité et par le dessus, les éléments critiques des réducteurs 8 et 9. Cet apport complémentaire d'huile par les conduits de secours peut doubler l'arrivée normale par les gicleurs 7, ou encore constituer l'unique système d'alimentation locale en huile.

En fonctionnement normal, c'est-à-dire lorsque le circuit normal de lubrification 3, est alimenté par le réservoir 2, le débit d'huile acheminé par le conduit 10 vers le réservoir de secours 11 est supérieur au débit d'huile s'écoulant par gravité dans les conduits de secours calibrés 12 en direction des réducteurs. Il en résulte que le réservoir de secours 11 est toujours rempli et déborde par son déversoir ce qui assure le retour du trop-plein d'huile vers le réservoir normal inférieur 2.

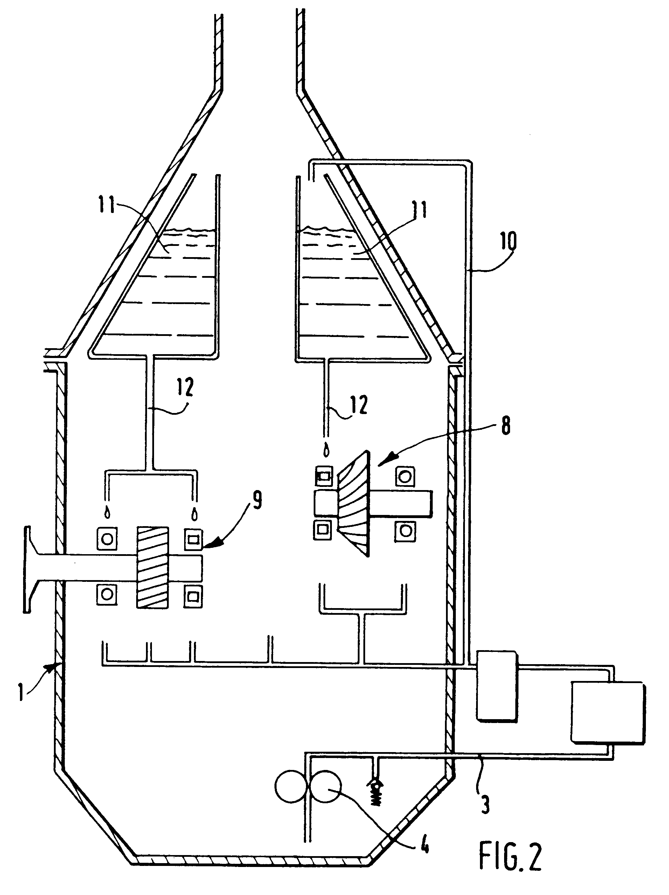

S'il y a une perte d'huile au fond de ce réservoir 2 ou une panne du système de lubrification normal (fuite dans le circuit, panne de la pompe 4, colmatage du filtre 6 etc...), comme on le voit à la figure 2, le réservoir de secours 11 va se vider progressivement en continuant de lubrifier par les conduits 12, les éléments critiques des réducteurs. Le réservoir de secours est dimensionné de telle sorte qu'il permet de disposer en permanence d'une réserve d'huile disponible pour alimenter à faible débit les éléments critiques du réducteur, ce faible débit étant obtenu par un dimensionnement approprié des conduits de secours 12 et la présence de gicleurs pour contrôler ce débit. On peut ainsi, puisque le réservoir de secours 11 a une charge de contenance significative et qu'il y a un faible débit de vidange dans le circuit de secours, assurer une lubrification minimale des éléments critiques de la boîte pendant un temps de fonctionnement suffisant pour rejoindre un terrain d'atterrissage adéquat.Ce circuit de distribution de la lubrification de secours est spécialement aménagé et indépendant du circuit normal sous pression de façon à optimiser la répartition du lubrifiant contenu dans le réservoir de secours, aux organes critiques, tant du point de vue du nombre de points à lubrifier et de leur choix, qu'à celui de la quantité de lubrifiant devant être acheminée à chaque point à lubrifier. Pour cela le circuit de distribution est calibré de façon très précise.

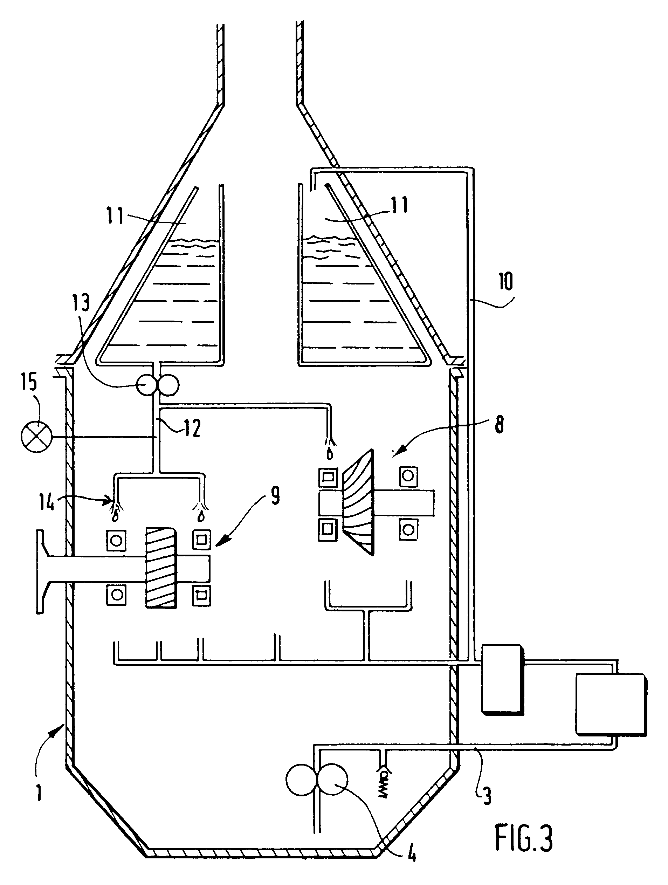

Dans la variante illustrée à la figure 3 est prévue une pompe de secours 13 sur au moins un conduit d'alimentation de secours 12, qui alimente des gicleurs de secours 14 à faible débit. La pompe 13 est entraînée par la boîte de transmission principale et possède une alarme 15 de basse pression d'huile. Celle-ci permet de surveiller en permanence le bon fonctionnement de ce circuit et dans le cas d'un fonctionnement de secours, d'indiquer au pilote l'épuisement de la réserve d'huile de secours.

## Revendications

1. Boîte de transmission principale de giravion ayant un dispositif de lubrification de secours pour son réducteur à engrenages dans laquelle un circuit normal de lubrification (3) alimenté par au moins une pompe (4) distribue l'huile sous pression, par des gicleurs (7), en direction des organes (8,9) du réducteur, caractérisé en ce qu'au moins un conduit de dérivation (10) provenant du circuit normal (3) alimente en permanence en huile au moins un réservoir de secours (11), placé au-dessus des éléments critiques (8,9) du réducteur, qui distribue l'huile en continu et à faible débit sur lesdits éléments critiques par un circuit spécial de lubrification de secours (12) du réducteur ou de la boîte de transmission, pour assurer une lubrification minimale desdits éléments critiques pendant un temps suffisant pour rejoindre un terrain d'atterrissage, en ce que le circuit spécial (12) est calibré pour que le débit d'huile acheminé par ledit conduit de dérivation (10) vers le réservoir de secours (11) soit supérieur au débit d'huile s'écoulant par ledit circuit spécial, et en ce que la partie supérieure ouverte du réservoir de secours forme déversoir pour le trop-plein d'huile qui déborde et fait retour vers le réservoir normal inférieur (2).

2. Boîte de transmission principale selon la revendication 1, caractérisé en ce qu'une pompe de secours (13) est prévue sur au moins un conduit d'alimentation du circuit de secours (12) pour alimenter en pression des gicleurs de secours (14) à faible débit.

3. Boîte de transmission principale selon la revendication 2, caractérisé en ce que la pompe de secours (13) est entraînée par le réducteur ou la boîte de transmission principale.

4. Boîte de transmission principale selon la revendication 2, caractérisé en ce que le conduit d'alimentation du circuit de secours (12) possède une alarme (15) de basse pression d'huile.

## Claims

1. Main gearbox of a rotary-wing aircraft having an emergency lubricating device for its reduction gear unit in which a normal lubricating circuit (3) fed by at least one pump (4) distributes oil under pressure, through nozzles (7), in the direction of the elements (8, 9) of the reduction unit, characterized in that at least one branch duct (10) coming from the normal circuit (3) feeds oil constantly to at least one emergency reservoir (11), arranged above the critical elements (8, 9) of the reduction unit, which distributes the oil continuously and at a low rate of flow to the said critical elements through a special emergency lubricating circuit (12) of the reduction gear or of the gearbox, in order to provide minimum lubrication of the said critical elements for a period of time sufficient to reach a landing ground, in that the special circuit (12) is calibrated so that the rate of flow of oil conveyed through the said branch duct (10) towards the emergency reservoir (11) is greater than the rate of flow of oil flowing off through the said special circuit, and in that the open upper part of the emergency reservoir forms an outlet for the overflow of oil which spills over and returns to the lower normal reservoir (2).

2. Main gearbox according to claim 1, characterized in that an emergency pump (13) is provided in at least one duct supplying the emergency circuit (12) for pressure feeding emergency nozzles (14) at a low rate of flow.

3. Main gearbox according to claim 2, characterized in that the emergency pump (13) is driven by the reduction unit or the main gearbox.

4. Main gearbox according to claim 2, characterized in that the supply duct of the emergency circuit (12) has a low oil pressure alarm (15).

## Patentansprüche

1. Hauptgetriebe eines Drehflügelflugzeugs mit einer Notschmiereinrichtung für dessen Untersetzungsgetriebe, in dem ein normaler, mit wenigstens einer Pumpe (4) ausgerüsteter Schmierkreislauf (3) das unter Druck stehende Öl durch Spritzdüsen (7) in Richtung der Untersetzungsgetriebemittel (8, 9) verteilt, dadurch gekennzeichnet, daß wenigstens eine Abzweigleitung (10), die von dem normalen Kreislauf (3) abgeht, wenigstens ein über den kritischen Elementen (8, 9) des Untersetzungsgetriebes angeordnetes Notreservoir (11) permanent mit Öl versorgt, welches das Öl fortwährend und mit geringer Menge über den kritischen Elementen durch einen speziellen Notschmierkreislauf (12) des Untersetzungsgetriebes oder des Hauptgetriebes verteilt, um für die kritischen Elemente während einer Zeitspanne, die zum Erreichen eines Flugfelds ausreicht, eine minimale Schmierung sicherzustellen, dadurch, daß der spezielle Kreislauf (12) so kalibriert ist, daß die durch die Abzweigleitung (10) zu dem Notreservoir (11) hin beförderte Ölmenge größer als die durch den speziellen Kreislauf strömende Ölmenge ist, und dadurch, daß der obere offene Teil des Notreservoirs einen Überlauf für den überlaufenden Ölüberschuß bildet und einen Rücklauf zu dem unteren normalen Reservoir (2) hin bewirkt.

2. Hauptgetriebe nach Anspruch 1, dadurch gekennzeichnet, daß eine Notpumpe (13) in wenigstens einer Versorgungsleitung des Notkreislaufes (12) vorgesehen ist, um Notspritzdüsen (14) mit einer geringen Menge an unter Druck stehendem Öl zu versorgen.

3. Hauptgetriebe nach Anspruch 2, dadurch gekennzeichnet, daß die Notpumpe (13) durch das Untersetzungsgetriebe oder das Hauptgetriebe angetrieben wird.

4. Hauptgetriebe nach Anspruch 2, dadurch gekennzeichnet, daß die Versorgungsleitung des Notkreislaufes (12) eine Alarmeinrichtung (15) für niedrigen Öldruck besitzt.
